# EUROPEAN PATENT APPLICATION

(11) **EP 2 765 493 A2**
(43) Date of publication of application: **13.08.2014**
(21) Application number: 14153414.9
(22) Date of filing: 31.01.2014
(51) Int. Cl.: G06F 3/044

(54) **Display panel capable of detecting touch and display apparatus having the same**

(30) Priority: 07.02.2013 KR 20130013975
(71) Applicant: Samsung Electronics Co., Ltd, Gyeonggi-do 443-742 (KR)
(72) Inventor: Chung, Seong-eun, Seoul (KR); Jung, Il-Yong, Gyeonggi-do (KR)
(74) Representative: Taor, Simon Edward William

(57) **Abstract**

A display apparatus includes: a display panel including a substrate, a black matrix formed on the substrate and dividing at least one of a plurality of pixels and a plurality of subpixels from others, and a mesh layer including a plurality of first conductive wires extended in a first direction on the substrate and a plurality of second conductive wires extended in a second direction different from the first direction on the substrate; and a controller configured to determine a location of a touch based on a change in electric current of at least one from among the plurality of first conductive wires and at least one from among the plurality of second conductive wires by the touch occurring on the display panel, wherein the plurality of first conductive wires and the plurality of second conductive wires are disposed on the substrate according to an arranged location of the matrix.

## Description

Apparatuses and methods consistent with the exemplary embodiments relate to a display panel structured to detect a touch on a surface thereof and a display apparatus having the same, more particularly to a display panel capable of detecting touch with a simple structure, not using a transparent electrode layer used for a conventional display panel to detect a touch thereon, and a display apparatus having the same.

A display apparatus is a device which includes a display panel displaying images to present broadcast signals or various formats of image signals or image data, and is configured as a TV, a monitor, or the like. The display panel is configured as various types, for example, a non-self-luminous panel including a liquid crystal display (LCD) panel and a self-luminous panel including a plasma display panel (PDP) and organic light emitting diodes (OLED), based on characteristics thereof and is employed for a variety of display apparatuses. The display apparatus may employ a touch panel or a touch screen as an input environment provided to facilitate input and manipulation by a user, the touch panel or touch screen enabling the user to touch the display panel to implement a preset input.

Touch panels are classified into a resistive type and a capacitive type, wherein a capacitive touch panel detects a touch based on electromotive force through the human body, for example, a finger, thereby detecting electromotive force on the surface of the panel charging and discharging of a condenser. The capacitive touch panel has relatively excellent light transmittance and quick reaction and enables soft manipulation and scrolling, and multi-touches as compared with a resistive touch panel.

The capacitive touch panel is realized by stacking a transparent electrode layer such as indium tin oxide (ITO) on a display panel with a general structure. However, the transparent electrode layer is expensive, making it difficult to apply a capacitive touch panel to a large screen.

A display apparatus comprises: a display panel comprising a substrate, a black matrix formed on the substrate and dividing at least one of a plurality of pixels and a plurality of sub-pixels from others, and a mesh layer including a plurality of first conductive wires extended in a preset first direction on the substrate and a plurality of second conductive wires extended in a second direction different from the first direction on the glass substrate; and a controller configured to determine a location of a touch based on a change in electric current of at least one from among the plurality of first conductive wires and at least one from among the plurality of second conductive wires by the touch occurring on the display panel, wherein the plurality of first conductive wires and the plurality of second conductive wires are disposed on the substrate according to an arranged location of the black matrix.

The controller may apply a preset level of electric current for detecting a touch to each of the plurality of first conductive wires and the plurality of second conductive wires and may determine coordinates of the location of the touch by identifying the plurality of first conductive wires and the plurality of second conductive wires where the change in electric current by the touch is detected.

The mesh layer may further include an insulating layer interposed between the plurality of first conductive wires and the plurality of second conductive wires to electrically insulate the plurality of first conductive wires from the plurality of second conductive wires.

The plurality of first conductive wire and the plurality of second conductive wires may include a metal material.

Respective widths of the plurality of first conductive wires and the plurality of second conductive wires may be smaller than widths of a row and a column of the black matrix.

The substrate may include a light entering surface in which light emitted to display an image on the display panel enters and a light existing surface which is disposed in an opposite direction of the light entering surface and from which the emitted light exits, and wherein the black matrix may be disposed on the light entering surface, and the mesh layer is disposed on the light exiting surface.

The plurality of first conductive wires and the plurality of second conductive wires may be disposed in a same line as the black matrix along a traveling direction of the emitted light.

The display apparatus may further include a backlight unit disposed on the display panel and generating the emitted light.

The plurality of first conductive wires and the plurality of second conductive wires may be perpendicular to each other.

A display panel includes: a substrate; a black matrix formed on a first surface of the substrate and dividing at least one of a plurality of pixels and a plurality of sub-pixels from others on the display panel; and a mesh layer formed on a second surface of the substrate disposed in an opposite direction of the first surface and including a plurality of first conductive wires extended in a preset first direction on the substrate and a plurality of second conductive wires extended in a second direction different from the first direction on the substrate, wherein a preset level of electric current for detecting a touch is applied to the at least one from among the plurality of first conductive wires and at least one from among the plurality of second conductive wires so that a change in electric current occurs in the plurality of first conductive wires and the plurality of second conductive wires corresponding to a location of a touch by a user when the touch occurs on the mesh layer, and the plurality of first conductive wires and the plurality of second conductive wires are disposed according to an arranged location of the black matrix.

The plurality of first conductive wires and the plurality of second conductive wires may be electrically connected to a controller of a display apparatus so that the controller determines the location of the touch occurring based on a change in electric current of the plurality of first conductive wires and the plurality of second conductive wires.

The mesh layer may further include an insulating layer interposed between the plurality of first conductive wires and the plurality of second conductive wires to electrically insulate the plurality of first conductive wires from the plurality of second conductive wires.

The plurality of first conductive wires and the plurality of second conductive wires may include a metal material.

Respective widths of the plurality of first conductive wires and the plurality of second conductive wires may be smaller than widths of a row and a column of the matrix.

Light emitted to display an image on the display panel may enter the first surface of the substrate, the emitted light entering the first surface may exit from the second surface, and the plurality of first conductive wires and the plurality of second conductive wires may be disposed in a same line as the black matrix along a traveling direction of the emitted light.

The plurality of first conductive wires and the plurality of second conductive wires may be perpendicular to each other.

According to an aspect of the invention, there is provided a display apparatus as set out in claim 1. Preferred features are set out in claims 2 to 10.

The above and/or other aspects will become apparent and more readily appreciated from the following description of the exemplary embodiments, taken in conjunction with the accompanying drawings, in which:
FIG. 1 is an exploded perspective view of a display apparatus according to an exemplary embodiment.
FIG. 2 is a cross-sectional view illustrating a layered structure of elements of a display panel of FIG. 1.
FIG. 3 is a perspective view of a main part illustrating a structure of a mash layer in the display panel of FIG. 2.
FIG. 4 illustrates an arrangement relationship between a black matrix and the mesh layer in the display panel of FIG. 2.
FIG. 5 is a block diagram illustrating a configuration of the display apparatus of FIG. 1.

Below, exemplary embodiments will be described in detail with reference to the accompanying drawings. In the following description, constituent parts or elements directly related to the exemplary embodiments will be described only, and descriptions of other parts or elements will be omitted. However, it should be noted that the omitted parts or elements are not construed as being unnecessary in configuring a device or system according to the exemplary embodiments.

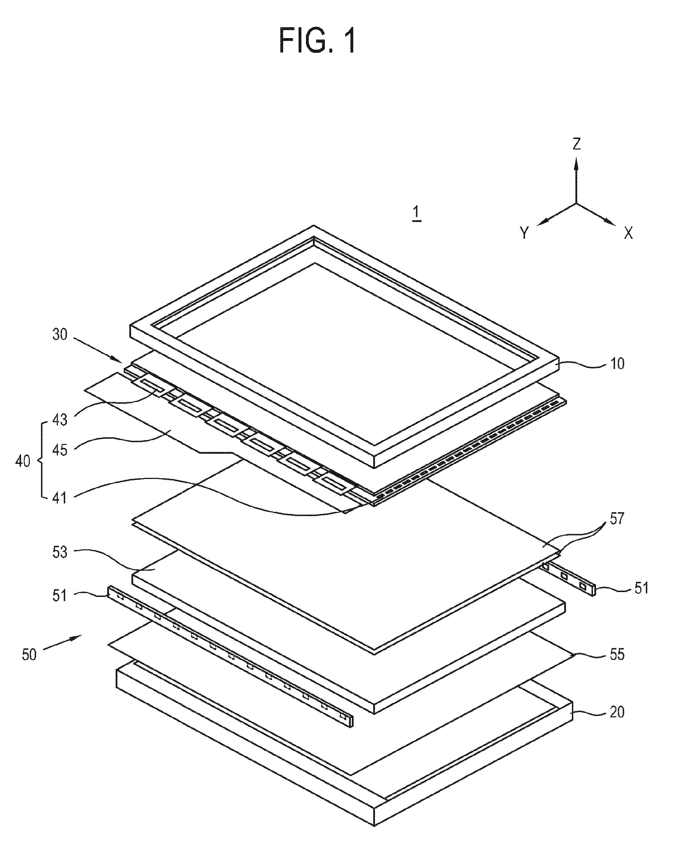

FIG. 1 is an exploded perspective view of a display apparatus 1 according to an exemplary embodiment.

As shown in FIG. 1, the display apparatus 1 according to the present exemplary embodiment include a liquid crystal display (LCD panel). In detail, the display apparatus 1 includes covers 10 and 20 forming an interior space, a display panel 30 situated in the interior space by the covers 10 and 20 and displaying images on a front surface thereof, a panel driver 40 driving the display panel 30, and a backlight unit 50 situated in the interior space by the covers 10 and 20 to face a rear surface of the display panel 30 and providing light to the display panel 30.

Here, directions shown in FIG. 1 are defined as follows. Basically, X, Y, and Z directions of FIG. 1 indicate width, length, and height directions of the display panel 30, respectively. The display panel 30 is disposed on an X-Y plane, and the covers 10 and 20, the display panel 30 and the backlight unit 50 are stacked along a Z-axis. Here, opposite X, Y, and Z directions are expressed as -X, -Y, and -Z directions, respectively, and the X-Y plane means a plane defined by an X-axis and a Y-axis.

The covers 10 and 20 form an outward shape of the display apparatus 1 and support the display panel 30 and the backlight unit 40 which are situated inside. Defining the Z direction as a front direction/front side and the -Z direction as a rear direction/rear side based on the display panel 30 in FIG. 1, the covers 10 and 20 include a front cover 10 supporting a front side of the display panel 30 and a rear cover 20 supporting a rear side of the backlight unit 50. The front cover 10 has an opening formed on a surface thereof parallel with the X-Y plane to expose an image display area of the display panel 30 therethrough.

The display panel 30 is configured as the LCD panel. The display panel 30 is formed of two substrates (not shown) and a liquid crystal layer (not shown) interposed therebetween and displays images on a surface thereof by adjusting an arrangement of liquid crystals in the liquid crystal layer (not shown) through application of driving signals. The display panel 30 does not emit light by itself and thus is provided with light from the backlight unit 50 to display images in the image display area.

The panel driver 40 applies a driving signal for driving the liquid crystal layer to the display panel 30. The panel driver 40 includes a gate drive integrated circuit (IC) 41, a data chip film package 43, and a printed circuit board (PCB) 45.

The gate drive IC 41 is integratedly formed on a substrate (not shown) of the display panel 30 and is connected to each gate line (not shown) on the display panel 30. The data chip film package 43 is connected to each data line (not shown) formed on the display panel 30. Here, the data chip film package 43 may include a wiring pattern, obtained by forming semiconductor chips on a base film, and a tape automated bonding (TAB) tape bonded by a TAB technique. The chip film package may include, for example, a tape carrier package (TCP) or a chip on film (COF). Meanwhile, the PCB 45 inputs a gate drive signal to the gate drive IC 41 and inputs a data drive signal to the data chip film package 43.

With this configuration, the panel driver 40 inputs drive signals to each gate line and each data line on the display panel 30, respectively, thereby driving the liquid crystal layer (not shown) by pixel.

The backlight unit 50 may be disposed at rear of the display panel 30; that is, in the -Z direction of the display panel 30, to provide light to the rear surface of the display panel 30. The backlight unit 50 includes a light source unit 51 disposed on an edge of the display panel 30, a light guide plate 53 disposed parallel with the display panel 30 to face the rear surface of the display panel 30, a reflection plate 55 disposed under the light guide plate 53 to face a lower surface of the light guide plate 53, and at least one optical sheet 57 disposed between the display panel 30 and the light guide plate 53.

The present exemplary embodiment illustrates an edge-type backlight unit 50 in which the light source unit 51 is disposed at a lateral side of the light guide plate 53 and a light emitting direction of the light source unit 51 and a light exiting direction of the light guide plate 53 are perpendicular to each other. However, a structure of the backlight unit 50 may be variously changed or modified in design, without being limited to the present exemplary embodiment. For example, a direct-type backlight unit 50 may be used in which the light source unit 51 is disposed under the light guide plate 53 such that the light emitting direction of the light source unit 51 and the light exiting direction of the light guide plate 53 are parallel with each other.

The light source unit 51 generates light and radiates the generated light to enter the light guide plate 53. The light source unit 51 is installed perpendicular to the surface of the display panel 30, that is, the X-Y plane, and disposed along at least one of four edges of the display panel 30 or the light guide plate 53. The light source unit 51 includes light emitting elements (not shown), configured as, for example, light emitting diodes (LEDs), sequentially disposed on a module substrate (not shown) in the X direction.

The light guide plate 53, which is a plastic lens formed of acrylic materials, uniformly guides light incident from the light source unit 51 to the entire image display area of the display panel 30. A lower side of the light guide plate 53 that is a side in the -Z direction faces the reflection plate 55. Further, among four side walls formed between an upper side and the lower side in four directions of the light guide plate 53, side walls in the Y and -Y directions face the light source unit 51. Light radiated from the light source unit 51 enters the side walls in the Y and -Y directions.

The light guide plate 53 includes various optical patterns (not shown) formed on the lower side to diffuse-reflect light proceeding in the light guide plate 53 or change a traveling direction of the light, thereby uniformly distributing light exiting from the light guide plate 53.

The reflection plate 55 under the light guide plate 53 reflects light exiting from an inside of the light guide plate 53 to the outside, thus reflecting the light back toward the light guide plate 53. The reflection plate 55 reflects light not reflected by the optical patterns formed on the lower side of the light guide plate 53 back into the light guide plate 53. To this end, a surface of the reflection plate 55 in the Z direction has total reflection characteristics.

The at least one optical sheet 57 is stacked on the light guide plate 53 to adjust characteristics of light exiting from the light guide plate 53. The optical sheet 57 may include a diffusion sheet, a prism sheet, a protection sheet and a dual brightness enhancement film (DBEF), among which two or more sheets may be stacked in combination for ultimately desired light characteristics.

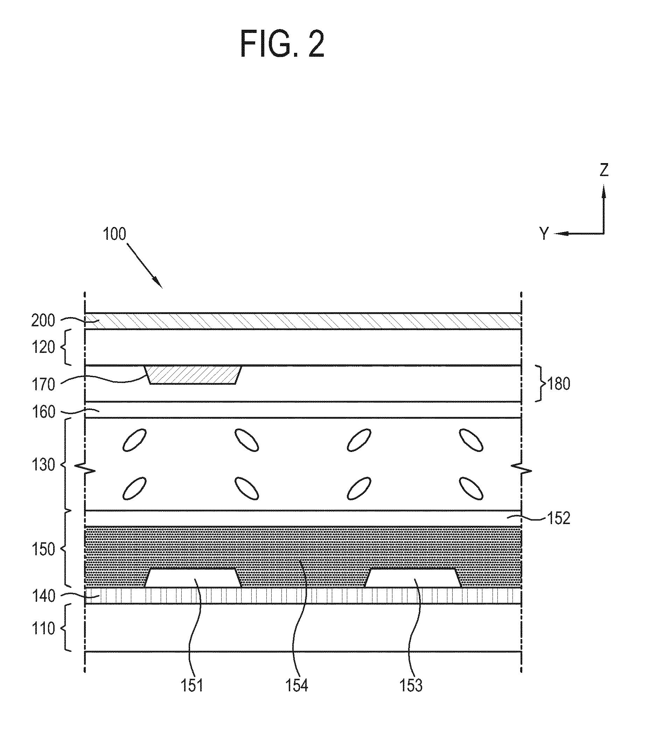

Hereinafter, a configuration of a display panel 100 according to an exemplary embodiment will be described in detail with reference to FIG. 2.

FIG. 2 is a cross-sectional view illustrating a layered structure of elements of the display panel 100. The display panel 100 of FIG. 2 has a configuration substantially the same as the display panel 30 shown in FIG. 1 and thus may be also applied to the display apparatus 1 of FIG. 1.

As shown in FIG. 2, the display panel 100 includes a first substrate 110, a second substrate 120 disposed to face the first substrate 110, a liquid crystal layer 130 disposed between the first substrate 110 and the second substrate 120, a color filter layer 140, and a pixel layer 150. It should be noted that the configuration of the display panel 100 illustrated in the present exemplary embodiment may not include all constituent elements needed for the LCD panel, but a new element may be added or an existing element may be changed and modified depending on a design.

The first substrate 110 and the second substrate 120 are transparent substrates disposed at a predetermined interval in the light proceeding direction to face each other. The first substrate 110 and the second substrate 120 may be formed of a glass or plastic substrate. As a plastic substrate, the first substrate 110 and the second substrate 120 may include polycarbonate, polyimide (PI), polyethersulphone (PES), polyacrylate (PAR), polyethylenenaphthelate (PEN), or polyethyleneterephehalate (PET).

The first substrate 110 and the second substrate 120 need to have different characteristics based on a drive method of the liquid crystal layer 130. For example, in a passive-matrix liquid crystal layer 130, the first substrate 110 and the second substrate 120 may include soda lime glass. In an active-matrix liquid crystal layer 130, the first substrate 110 and the second substrate 120 may include alkali free glass or borosilicate glass.

The liquid crystal layer 130 is disposed between the first substrate 110 and the second substrate 120 and adjusts light transmittance with a change in arrangement of the liquid crystals based on an applied driving signal. A liquid generally includes molecules with irregular orientation and arrangement, while liquid crystals are matter in a regular state, to a certain extent, similar to a liquid phase. For example, there is a solid which becomes a liquid phase exhibiting anisotropic properties such as birefringence when heated and melted. Liquid crystals have optical properties such as birefringence or color change. A liquid crystal is called such a name since the liquid crystal has properties of both liquid and solid crystal. For example, the liquid crystal may include a crystal-like property and a liquid-like phase. When voltage is applied to the liquid crystals, an arrangement of the molecules is changed and optical properties are also changed accordingly.

The liquid crystals in the liquid crystal layer 130 may be classified into nematic, cholesteric, smectice, and ferroelectric liquid crystals based on an arrangement of the molecules. The arrangement of the liquid crystal layer 130 may be adjusted according to various operation modes of the display panel 100, such as a twisted nematic (TN) mode, a vertical alignment (VA) mode, a patterned vertical alignment (PVA) mode and an in-plane switching (IPS) mode. To improve an optical view angle, technologies of dividing or patterning sub-pixels are implemented and technologies of uniformly adjusting refractive index of the liquid crystals are implemented.

The color filter layer 140 converts light entering the display panel 100 into RGB colors of light to transmit to the liquid crystal layer 130. A pixel of the display panel 100 includes sub-pixels corresponding to the RGB colors, respectively, and the color filter layer 140 conducts filtering on each sub-pixel by color. The color filter layer 140 may be formed of each region colored with each color of dye as a dye layer. When light passes through the color filter layer 140, light of different colors, by sub-pixels, is emitted.

The color filter layer 140 may be disposed between the first substrate 110 and the pixel layer 150 as in the present exemplary embodiment, without being limited thereto. Alternatively, the color filter layer 140 may be disposed toward the lower substrate 120 depending on a design.

The pixel layer 150 includes a plurality of pixels changing the arrangement of the liquid crystals in the liquid crystal layer 130 according to an applied control signal or driving signal, wherein one pixel includes a plurality of sub-pixels as described above. Each sub-pixel includes a thin film transistor (TFT) 151 as a switching element, a pixel electrode 152 electrically connected to the TFT 151, a sustain electrode 153 to accumulate electric charges, and a protection layer 154 covering the TFT 151 and the sustain electrode 153.

The TFT 151 has a structure in which an insulating layer and a semiconductor layer are stacked on a gate electrode, and an ohmic contact layer, a source electrode and a drain electrode are stacked thereon. The ohmic contact layer includes silicide or n+ hydrogenated amorphous silicon highly doped with n-type impurities. The source electrode is electrically connected to the pixel electrode 152.

The pixel electrode 152 includes a transparent conductive material such as indium tin oxide (ITO) or indium zinc oxide (IZO).

Meanwhile, the display panel 100 further includes a common electrode 160, a black matrix 170 and an overcoat layer 180 disposed between the second substrate 120 and the liquid crystal layer 130.

The common electrode 160 is disposed on an upper surface of the liquid crystal layer 130. The common electrode 160 includes a transparent conductive material such as ITO or IZO and applies voltage to the liquid crystal layer 130 along with the pixel electrode 152.

The black matrix 170 serves to divide the pixels and to divide sub-pixels in one pixel. Further, the black matrix 170 prevents external light from flowing into the display panel 100 to a certain extent. The black matrix 170 includes a photosensitive organic material including black dye, such as carbon black, titanium oxide or the like.

The overcoat layer 180 covers and protects the black matrix 170 and flattens a lower surface of the black matrix 170 so as to stack the common electrode 160. The overcoat layer 180 may include an acrylic epoxy material.

In addition to the foregoing elements, the display panel 100 may include a polarizing layer (not shown) to change polarizing characteristics of light, a protection film (not shown) to protect the display panel 100 against external stimuli and an antireflection film (not shown) to suppress surface reflection of the display panel 100 due to external light.

In a conventional configuration of a capacitive touch panel as the display panel 100, a touch-sensitive layer including ITO is stacked on an external surface, that is, an upper surface of the display panel 100. Here, ITO of the touch-sensitive layer does not refer to the pixel electrode 152 and the common electrode 160 applying voltage to the liquid crystal layer 130 in the display panel 100, but is a separate component adopted to detect a touch.

The conventional touch-sensitive layer necessarily includes ITO. Thus, when a screen becomes large-sized with uniform thickness of ITO, a sheet resistance value of ITO increases, and accordingly sensitivity to detection of a touch relatively decreases or is different depending on a touching position, and manufacture costs remarkably rise. Thus, the conventional touch-sensitive layer is not easy to apply to a large-screen display panel 100.

If the thickness of ITO is made relatively large, the sheet resistance value may be reduced. In this case, however, light transmittance also decreases, an image displayed on the display panel 100 may be viewed with relatively reduced brightness. Further, a refractive index of ITO may cause a distortion of an image perceived by the user.

Considering this, the present embodiment suggests a structure as follows.

The display panel 100 further includes a mesh layer 200 including conductive mesh on an outmost surface, that is, a surface in the Z direction or an upper surface of the second substrate 120, which is touchable by a user.

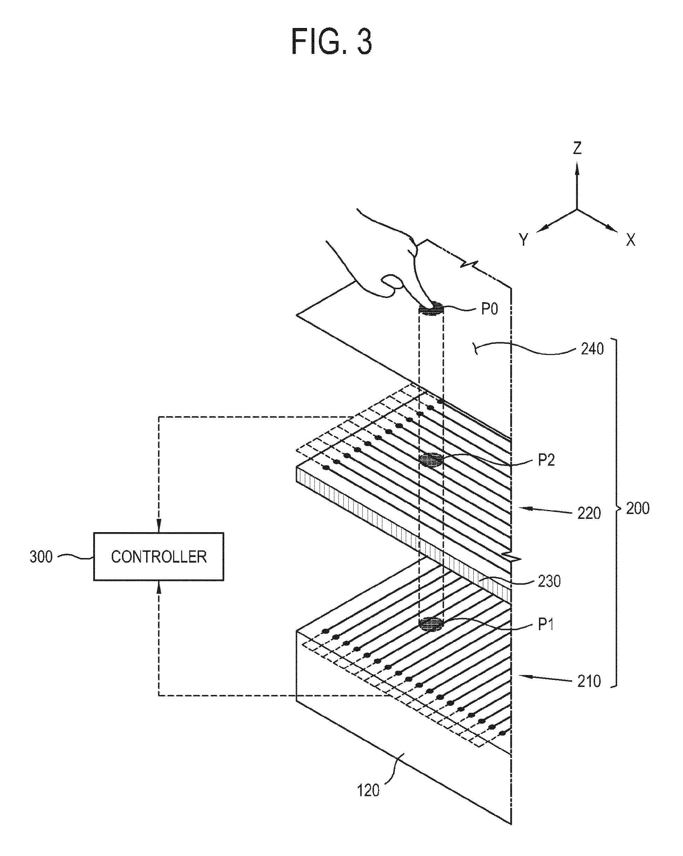

Hereinafter, the mesh layer 200 is described with reference to FIG. 3.

FIG. 3 is a perspective view of a main part illustrating a structure of the mash layer 200.

As shown in FIG. 3, the mesh layer 200 has a double-layer structure. The mesh layer 200 includes a plurality of first wires 210 extending in one direction on the upper surface of the second substrate 120, a plurality of second wires 220 extending in a different direction from the extending direction of the first wires 210, and an insulating layer 230 disposed between the first wires 210 and the second wires 220 to insulate the first wires 210 from the second wires 220. The mesh layer 200 may further include a protection film 240 to protect the second wires 220.

The first wire 210 includes an opaque high-conductance metal material, for example, gold, silver, copper and aluminum. Any one of the first wires 210 extends in the Y direction, and the first wires 210 are distributed at preset intervals across the upper surface of the second substrate 120.

An electric current for detecting a touch is applied at the same level to each of the first wires 210, and the first wires 210 are electrically connected to a controller 300 of the display apparatus 1. The controller 300 detects the electric current to each connected first wire 210, and may detect a change in electric current or amount of electric charge flowing in some of the first wires 210 if the change occurs.

The second wire 220 also includes an opaque high-conductance metal material. The second wires 220 extend in a different direction from the extending direction of the first wires 210, for example, the X direction perpendicular to the Y direction. The extending direction of the first wires 210 is not necessarily perpendicular to the extending direction of the second wires 220 as it is in the present embodiment, but the two extending directions are at least different from each other. That is, an angle between the first wires 210 and the second wires 220 is not at least o or 180 degrees.

The second wires 220 are distributed at preset intervals across the insulating layer 230. Here, distribution areas of the first wires 210 and the second wires 220 correspond to an area for detecting a user touch.

An electric current for detecting a touch is applied at the same level to each of the second wires 220, and the second wires 220 are electrically connected to the controller 300. The same level of electric currents for detecting a touch may be applied to the first wires 210 and the second wires 220, or different levels of electric currents may be applied to the first wires 210 and the second wires 220, respectively. The controller 300 detects the electric current to each connected second wire 220, and may detect a change in electric current or amount electric charge flowing in some of the second wires 220 if the change occurs.

The first wires 210 and the second wires 220 are distributed parallel with the X-Y plane. Thus, the first wires 210 and the second wires 220 form a mesh shape, viewed from a direction in which the user generally watches the display panel 100, that is, from the -Z direction. Here, the first wires 210 and the second wires 220 are insulated from each other by the insulting layer 230.

With this structure, a method of detecting a location of a user touch on the display panel 100 will be described as follows.

While a preset level of electric current for detecting a touch is applied to the first wires 210 and the second wires 220, the user touches a location Po on the display panel 100. Since electricity may flow in the human body, electrons neighboring to the location Po move to a user's finger. Accordingly, the controller 300 detects a change in amount of electric charge on at least one first wire 210 passing through a location P1 corresponding to the location Po and on at least one second wire 220 passing through a location P2 corresponding to the location Po.

The first wires 210 and the second wires 220 extend perpendicular to each other or cross at a preset angle, the controller 300 may specify coordinates of the location Po on the second-dimensional (2D) plane based on a result of identifying a first wire 210 and a second wire 22 where a change in amount of electric charge is detected.

When the display panel 100 is configured as a touch panel with the foregoing structure, expensive ITO is not used, unlike the conventional display panel, thereby realizing a low-cost touch panel. Further, this structure may be easily applied to a large-screen display panel 100.

However, the structure described above may be involved in a situation as follows.

To display an image on the display panel 100, light emitted from the backlight unit 50 proceeds in the Z direction, passing through the second substrate 120 and the mesh layer 200. However, the first wires 210 and the second wires 220 of the mesh layer 200 include the opaque metal material. Thus, when the light emitted from the upper surface of the second substrate 120 is hit by the first wires 210 or the second wires 220, the light may be reflected toward an inside of the display panel 100, that is, in the -Z direction, not exiting out of the display panel 100. This means a decrease in light transmittance of the display panel 100, in which case brightness of an image perceived by the user is relatively reduced.

Considering this, the present embodiment suggests a structure as follows.

The black matrix 170 serves to divide the pixels and sub-pixels in the display panel 100. In the present embodiment, the first wires 210 and the second wires 220 of the mesh layer 200 are disposed according to the black matrix 170 or corresponding to the black matrix 170. That is, the first wires 210 and the second wires 220 are disposed in the same line as the black matrix 170 on the Z-axis.

Here, a width of the first wires 210 and a width of the second wires are adjusted smaller than a width of the black matrix 170 so that light emitted from the second substrate 20 is not interrupted by the first wires 210 and the second wires 220.

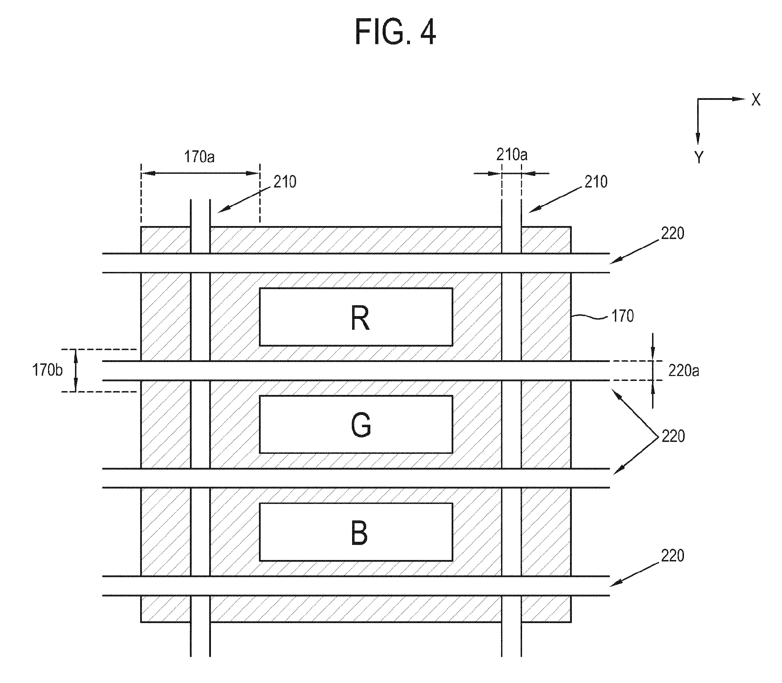

FIG. 4 illustrates an arrangement relationship between the black matrix 170 and the mesh layer 200.

As shown in FIG. 4, the black matrix 170 divides one pixel from another pixel and divides a plurality of sub-pixels (R, G and B) respectively corresponding to R, G and B colors in one pixel on the X-Y plane. FIG. 4 shows the black matrix 170 corresponding to only one pixel, and the black matrix 170 divides the sub-pixels in one pixel in various forms.

The first wires 210 and the second wires 220 are disposed to overlap the black matrix 170. The width 210a of the first wires 210 extending in the Y direction is smaller than a column width 170a of the black matrix 170, and the width 220a of the second wires 220 extending in the X direction is smaller than a row width 170B of the black matrix 170.

Accordingly, the first wires 210 and the second wires 220 may not block light emitted from the sub-pixels (R, G and B), thereby preventing a decrease in light transmittance of the display panel 100.

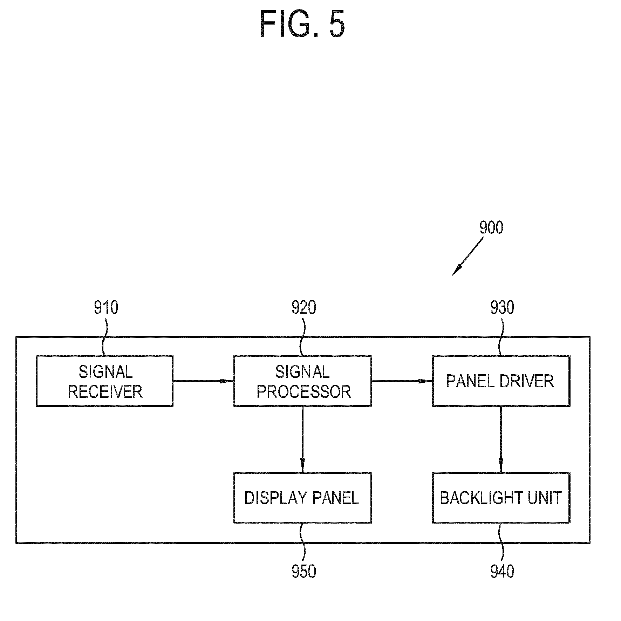

Hereinafter, a configuration of a display apparatus 900 according to an exemplary embodiment will be described with reference to FIG. 5.

FIG. 5 is a block diagram illustrating the configuration of the display apparatus 900.

As shown in FIG. 5, the display apparatus 900 includes a signal receiver 910 receiving an image signal, a signal processor 920 processing the image signal received by the signal receiver 910 according to a preset image processing process, a panel driver 930 outputting a driving signal corresponding to the image signal processed by the signal processor 920, a display panel 940 displaying an image based on the image signal in accordance with the driving signal from the panel driver 930, and a backlight unit 950 providing light to the display panel 940 corresponding to the image signal processed by the signal processor 920.

In the present embodiment, the display apparatus 900 may be configured as various devices capable of displaying images, for example, a TV, a monitor, a portable media player and a mobile phone.

The signal receiver 910 receives an image signal or image data and transmits the image signal or image data to the signal processor 920. The signal receiver 910 may be configured as various types based on standards of received image signals and configurations of the display apparatus 900. For example, the signal receiver 910 may receive a radio frequency (RF) signal transmitted from a broadcasting station (not shown) wirelessly or various image signals in accordance with composite video, component video, super video, SCART, high definition multimedia interface (HDMI), DisplayPort, unified display interface (UDI) or wireless HD standards via a cable. When the image signal is a broadcast signal, the signal receiver 910 includes a tuner to tune the broadcast signal by each channel. Alternatively, the signal receiver 910 may receive an image data packet from a server (not shown) through a network.

The signal processor 920 performs various image processing processes on the image signal received by the signal receiver 910. The signal processor 920 outputs a processed image signal to the panel driver 930, thereby displaying an image based on the image signal on the display panel 940.

The signal processor 920 may perform any kind of image processing, without being limited to, for example, decoding corresponding to an image format of image data, deinterlacing to convert interlaced image data into a progressive form, scaling to adjust image data to a preset resolution, noise reduction to improve image quality, detail enhancement, frame refresh rate conversion, or the like.

The signal processor 920 may be configured as an image processing board (not shown) formed by mounting an integrated multi-functional component, such as a system on chip (SOC), or separate components which independently conduct individual processes on a printed circuit board and be embedded in the display apparatus 900.

The panel driver 930, the display panel 940, and the backlight unit 950 have configurations substantially the same as those in the foregoing embodiment, and thus detailed descriptions thereof are omitted herein.

Furthermore, the controller 300 described above may be included in the signal processor 920 or be configured separately.

As discussed above, embodiments of the present invention provide a display apparatus comprising: a display panel comprising a substrate, a black matrix formed on the substrate and dividing at least one of a plurality of pixels and a plurality of sub-pixels from others, and a mesh layer comprising a plurality of first conductive wires extended in a preset first direction on the substrate and a plurality of second conductive wires extended in a second direction different from the first direction on the substrate; and a controller configured to determine a location of a touch based on a change in electric current of at least one from among the plurality of first conductive wires and at least one from among the plurality of second conductive wires as a result of the touch occurring on the display panel, wherein the plurality of first conductive wires and the plurality of second conductive wires are disposed on the substrate according to an arranged location of the black matrix

The black matrix can serves to divide the pixels and sub-pixels in the display panel 100. The first wires and the second wires of the mesh layer are disposed according to the black matrix or corresponding to the black matrix. That is, the first wires and the second wires can be disposed in the same line as the black matrix on the Z-axis. In some embodiments, the first wires and second wires overlap with the black matrix.

In some embodiments, a width of the first wires and a width of the second wires are adjusted smaller than a width of the black matrix so that light emitted from the second substrate is not interrupted by the first wires and the second wires.

The foregoing embodiments have been illustrated with an LCD panel as the display panel 100 but may be applied to any self-luminous or non-self-luminous display panel 100 having the black matrix 170.

Although a few exemplary embodiments have been shown and described, it will be appreciated by those skilled in the art that changes may be made in these exemplary embodiments without departing from the principles of the invention, the scope of which is defined in the appended claims and their equivalents.

## Claims

1. A display apparatus comprising:
a display panel comprising a substrate, a black matrix formed on the substrate and dividing at least one of a plurality of pixels and a plurality of sub-pixels from others, and a mesh layer comprising a plurality of first conductive wires extended in a preset first direction on the substrate and a plurality of second conductive wires extended in a second direction different from the first direction on the substrate; and
a controller configured to determine a location of a touch based on a change in electric current of at least one from among the plurality of first conductive wires and at least one from among the plurality of second conductive wires as a result of the touch occurring on the display panel,
wherein the plurality of first conductive wires and the plurality of second conductive wires are disposed on the substrate according to an arranged location of the black matrix.

2. The display apparatus of claim 1, wherein the controller is arranged to apply a preset level of electric current for detecting a touch to each of the plurality of first conductive wires and the plurality of second conductive wires and to determine coordinates of the location of the touch by identifying the plurality of first conductive wires and the plurality of second conductive wires where the change in electric current by the touch is detected.

3. The display apparatus of claim 1 or 2, wherein the mesh layer further comprises an insulating layer interposed between the plurality of first conductive wires and the plurality of second conductive wires to electrically insulate the plurality of first conductive wires from the plurality of second conductive wires.

4. The display apparatus of any one of claims 1 to 3, wherein the plurality of first conductive wires and the plurality of second conductive wires comprise a metal material.

5. The display apparatus of any one of claims 1 to 4, wherein respective widths of the plurality of first conductive wires and the plurality of second conductive wires are smaller than widths of a row and a column of the black matrix.

6. The display apparatus of any one of claims 1 to 5, wherein the substrate comprises a light entering surface in which light emitted to display an image on the display panel is arranged to enter, and a light exiting surface which is disposed in an opposite direction of the light entering surface and from which the emitted light is arranged to exit, and wherein the black matrix is disposed on the light entering surface, and the mesh layer is disposed on the light exiting surface.

7. The display apparatus of claim 6, wherein the first wires and the second wires are disposed in the same line as the black matrix along a travelling direction of the emitted light.

8. The display apparatus of claim 6 or 7, wherein the plurality of first conductive wires and the plurality of second conductive wires are disposed in a same line as the black matrix along a travelling direction of the emitted light.

9. The display apparatus of any one of claims 1 to 8, wherein the plurality of first conductive wires and the plurality of second conductive wires are perpendicular to each other.

10. The display apparatus of any one of claims 1 to 9, wherein the plurality of first conductive wires and the plurality of second conductive wires overlap with the black matrix.
